# EUROPÄISCHE PATENTSCHRIFT

(11) **EP 0 409 849 B1**
(45) Veröffentlichungstag und Bekanntmachung des Hinweises auf die Patenterteilung: **05.10.1994**
(21) Anmeldenummer: 89903281.7
(22) Anmeldetag: 28.02.1989
(51) Int. Cl.: F26B 3/08, F26B 23/00, A23B 4/03

(54) **VERFAHREN UND VORRICHTUNG ZUR TROCKNUNG VON GRANULATMATERIAL**
METHOD AND DEVICE FOR DRYING GRANULAR MATERIAL
PROCEDE ET DISPOSITIF DE SECHAGE DE MATIERE GRANULAIRE

(30) Priorität: 02.03.1988 NO 880916
(43) Veröffentlichungstag der Anmeldung: 30.01.1991
(73) Patentinhaber: STIFTELSEN FOR INDUSTRIELL OG TEKNISK FORSKNING VED NORGES TEKNISKE HÖGSKOLE (SINTEF), N-7034 Trondheim (NO)
(72) Erfinder: STRÖMMEN, Ingvald, N-7053 Ranheim (NO); MAGNUSSEN, Ola, M., N-7033 Trondheim (NO); SONG, Xiaomei, N-7035 Trondheim (NO)
(74) Vertreter: Hennig, Peter
(86) Internationale Anmeldenummer: NO8900018
(87) Internationale Veröffentlichungsnummer: WO8908229

(56) Entgegenhaltungen:
- DE-A- 3 509 549
- GB-A- 2 074 299
- NO-B- 153 912
- US-A- 4 335 150
- US-A- 4 646 447

## Beschreibung

### Stand der Technik

Die Erfindung betrifft ein Verfahren und eine Vorrichtung zum Trocknen und/oder Gefrieren von körnigen Stoffen, insbesondere von in körniger Form vorliegenden organischen Stoffen wie Nahrungsmitteln, Futter und Rohstoffen für pharmazeutische Zwecke, bei dem ein Gas oder Gasgemisch als Trocknungs- und/ oder Kältemittel den körnigen Stoff in aufsteigender Richtung durchströmt und diesen während des Trocknens und/oder Gefrierens in Bewegung hält, und bei dem das Gas oder Gasgemisch in einem zur äußeren Atmosphäre hin abgeschlossenen Kreislauf geführt und entfeuchtet wird. Ein derartiges Verfahren und eine derartige Vorrichtung sind der der US-A-4 335 150 als bekannt zu entnehmen.

Bei der bekannten Vorrichtung wird für die schonende Trocknung bzw. Gefriertrocknung von in körniger Form vorliegenden Nahrungsmitteln Luft oder ein inertes Gas wie Stickstoff als Trocknungs- und/oder Kältemittel - im folgenden als Gas oder Gasgemisch bezeichnet - verwendet, welches unter Anwendung von Feuchtigkeit bzw. Wasserdampf adsorbierendem Material, z.B. Silikagel, entfeuchtet wird. Dieses Material ist in Form von Packlagen in zwei gesonderten Behältnissen untergebracht, die in ein kompliziertes, vielfach verzweigtes Leitungssystem integriert sind. In diesem Leitungssystem sind ferner ein die zu trocknenden Nahrungsmittel auf einem gasdurchlässigen Tragemittel aufnehmender Behälter und eine Fördereinrichtung in Form einer Vakuumpumpe und/oder eines Kompressors für das Gas oder Gasgemisch vorgesehen. - Während eines Trocknungsvorganges werden die in körniger Form vorliegenden Nahrungsmittel von dem Gas oder Gasgemisch derart in aufsteigender Richtung durchströmt, daß das Nahrungsmittelgranulat während des Trocknens in Bewegung gehalten werden kann. Die hierbei in das Gas oder Gasgemisch übergehende Feuchtigkeit wird dem Gas oder Gasgemisch über das erwähnte komplizierte Leitungssystem wechselweise von den beiden Packlagen aus Silikagel oder dgl. wieder mehr oder weniger entzogen. Dabei ist es notwendig, im Bereich der die erwähnten Packlagen aufnehmenden Behälter vom Gasdruck im übrigen Leitungssystem erheblich abweichende, niedrigere Gasdrücke zu erzeugen. Wegen des ständig sich ändernden Sättigungsgrades der erwähnten Packlagen mit Feuchtigkeit und der notwendigen, in Zeitabständen von beispielsweise 8 min erfolgenden Umschaltung von einer Packlage zur anderen sind konstant bleibende Trocknungsverhältnisse für das zu trocknende Gut bei dieser Vorrichtung nicht zu erwarten.

Zu den Mitteln, die zum Einstellen und Aufrechterhalten einer vorbestimmten Temperatur und relativen Feuchtigkeit des Gases oder Gasgemisches bzw. des zu trocknenden Gutes eingesetzt werden sollen, enthält diese Druckschrift keinen Hinweis.

Die DE-A-35 09 549 beschreibt eine Einrichtung zum Trocknen von Gütern in Konvektionstrocknern, bei der zum Trocknen der Güter Luft aus der Umgebung verwendet wird und zum Entfeuchten dieser Luft eine Wärmepumpe eingesetzt wird. Die Wärmepumpe dient darüberhinaus auch teilweise zur Erwärmung der mehr oder weniger entfeuchteten Luft. Bei den im Fall dieser Druckschrift zu trocknenden Gütern handelt es sich jedoch nicht um in körniger Form vorliegende Nahrungsmittel oder dgl., die während des Trocknungsprozesses in Bewegung gehalten werden sollen, sondern um Holz oder ähnliches Trockengut, welches während des Trocknens in einem Trockner ruhend gelagert ist. Zum Entfeuchten der zum Trocknen verwendeten Luft wird nicht nur der Verdampfer der Wärmepumpe eingesetzt, sondern wegen der besonderen, sich aus der Art des Trockengutes ergebenden Trocknungsbedingungen wird während eines Trockenvorganges ständig ein mehr oder weniger großer Anteil der im Kreislauf befindlichen feuchten Luft nach außen abgegeben und ein entsprechender Anteil relativ trockener Luft wird an anderer Stelle des Kreislaufes diesem wieder zugeführt. Dementsprechend handelt es sich hier also um einen zur äußeren Atmosphäre hin offenen Kreislauf mit sich daraus zwangsläufig ergebenden Verlusten an Prozeßwärme. Zum Ausgleich dieser Verluste muß Wärme über gesonderte Heizeinrichtungen dem offenen Kreislauf zugeführt werden.

### Aufgabe

Der Erfindung liegt die Aufgabe zugrunde, zum Trocknen und/ oder Gefrieren von körnigen Stoffen, insbesondere von in körniger Form vorliegenden Stoffen wie Nahrungsmitteln, Futter und Rohstoffen für pharmazeutische Zwecke einen Weg zu weisen, der bei gleichermaßen schonender Behandlung des Trockengutes wesentlich einfacher zu verwirklichen ist, darüberhinaus kostengünstiger ist und einen erheblich gleichmäßigeren Betrieb ermöglicht als die Vorrichtung nach der US-A-4 335 150. Insbesondere soll eine genaue Regelung der Temperatur und der relativen Feuchtigkeit des Gases oder Gasgemisches erreicht werden, so daß Eigenschaften wie Aussehen, Geschmack und Zusammensetzung der Produkte verbessert sowie geforderte physikalische Eigenschaften erhalten werden und darüberhinaus Energie eingespart wird.

### Lösung

Zur Lösung der genannten Aufgabe wird das im Patentanspruch 1 beschriebene Verfahren vorgeschlagen. Eine Vorrichtung zum Durchführen dieses Verfahrens ist im Patentanspruch 2 beschrieben.

Weitere vorteilhafte Ausgestaltungen der erfindungsgemäßen Vorrichtung sind in den Patentansprüchen 3 bis 6 angegeben.

Das erfindungsgemäße Verfahren ermöglicht Trocknungsbedingungen, die derart eingestellt werden können, daß eine hohe Qualität des zu trocknenden und/oder zu gefrierenden Stoffes aufrechterhalten werden kann unabhängig von der Art des körnigen Stoffes oder seiner chemischen und physikalischen Eigenschaften. Das Verfahren kann angewendet werden zum Trocknen von Seefisch, Futtermitteln aus Rogen, zum Beispiel, und verschiedenen Nahrungsmitteln wie Garnelen, Gemüse etc. Andere Anwendungen sind das Trocknen von Rohstoffen für konservierte Nahrungsmittel wie Speisen, die in Beuteln oder Tüten verkauft werden und Arten von Fleisch, bei dem das Fett ranzig werden kann.

Wenn das Wärmepumpenprinzip angewendet wird, wie es die Erfindung beabsichtigt, wird dies erhebliche Energiebeträge einsparen. In manchen Fällen kann dies zu Einsparungen von 60-80% führen verglichen mit Trocknungseinheiten, die sich auf direkte Erwärmung gründen.

### Beschreibung eines Ausführungsbeispiels

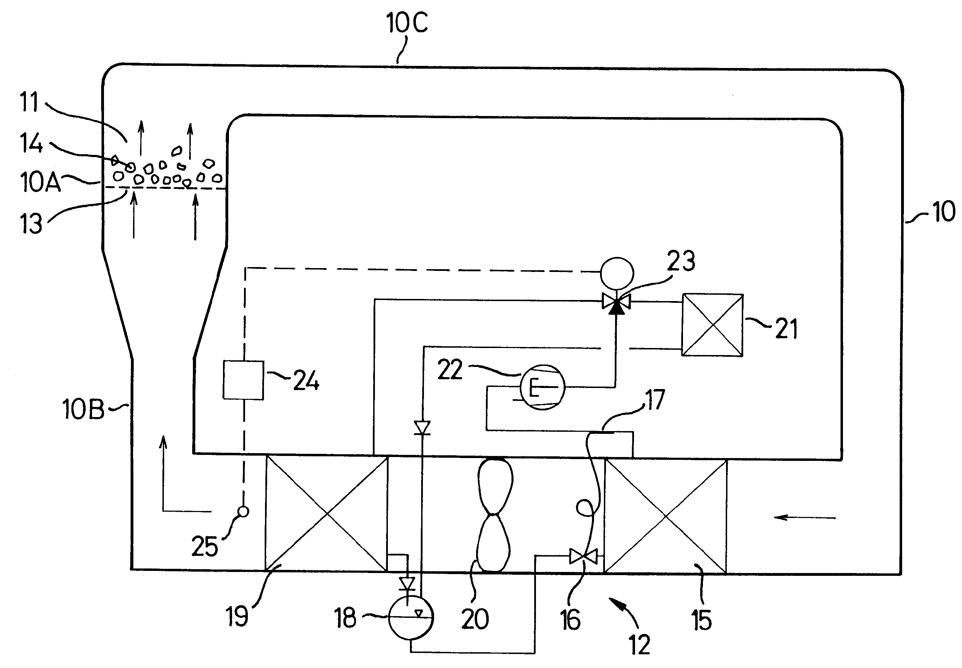

Die Figur ist eine schematische Darstellung einer Einheit oder Anlage zum Durchführen des erfindungsgemäßen Verfahrens.

Die Einheit besteht aus einem Kreislauf 10 für ein Gas oder Gasgemisch. In dem Einlaßbereich des Kreislaufes 10 ist eine Trocknungskammer 11 vorgesehen mit einer davorliegenden Wärmepumpe 12. Der Kreislauf 10, die die Trocknungskammer 11 umgebenden und bildenden Teile und die Hauptbestandteile der Wärmepumpe 12 können mit vorhandenen Techniken aus Material hergestellt werden, welches für Lüftungskanäle, Rohrnetze und Blechverkleidungen verwendet wird.

In dem Beispiel ist ein erweiterter Bereich der Trocknungskammer 11 zwischen einem vorausgehenden und einem anschließenden Teil der Rohrleitung 10B bzw. 10C gezeigt. Es ist ein Siebboden 13 in dem erweiterten Bereich des Kreislaufes 10 vorgesehen. Dieser erweiterte Bereich wird im folgenden als Behandlungsabschnitt 10A bezeichnet. Der Behandlungsabschnitt 10A verläuft in vertikaler Richtung, während der Siebboden 13 horizontal liegt. Zusätzlich kann die Eingabeöffnung (nicht dargestellt) für den körnigen Stoff 14 wie nachstehend beschrieben geschlossen werden. In einer alternativen Ausführungsform kann die Trocknungskammer 11 einen Schneckenförderer oder Ähnliches, der bzw. das nach innen führt, und einen Auslaßkanal für das behandelte Produkt aufweisen. Dies ermöglicht eine ununterbrochene Zufuhr von körmigem Stoff zur Trocknungskammer 11, während der behandelte Stoff herausgeführt wird. Hierbei könnte es vorteilhaft sein, Schleusen vorzusehen, um den erwünschten Überdruck beizubehalten und Verluste an Trocknungsmittel zu vermeiden.

Eine alternative Ausführung könnte eine rotierende Lochtrommel verwenden innerhalb des Behandlungsabschnittes 10A; in dieser könnte der körnige Stoff entweder in Schüben behandelt werden oder könnte kontinuierlich zu- und abgeführt werden. Dies ist nützlich bei kontinuierlichem, verlängertem Trocknen, insbesondere wenn Gefrieren gefordert wird.

Bemerkungen: Die folgenden Ausführungen erstrecken sich auf Details möglicher Lösungen und konzentrieren sich auf ursprüngliche und spezifische Merkmale.

Die Wärmepumpe 12 weist an ihrem Einlaßende einen Verdampfer 15 auf, wo erwärmtes, feuchtes Gas oder Gasgemisch auf kalte Kondensationsplatten trifft, an denen der Dampf einer Verflüssigung unterzogen wird. Die Kondensationsplatten werden von einem fließenden Kältemittel wie Freon gekühlt, welches über ein thermostatisch gesteuertes Ventil 16 aus einem Drucktank 18 zugeführt wird. Das Ventil 16 wird durch einen nicht dargestellten Regelkreil von einem im Auslaß des Kältemittels bei den Kondensationsplatten des Verdampfers 15 befindlichen Temperaturfühler 17 gesteuert.

Nach dem Entfernen des Dampfes wird das Gas oder Gasgemisch einem Hauptkondensator 19 zugeführt, der stromabwärts im Kreislauf 10 angeordnet ist. Zwischen Verdampfer 15 und Kondensator 19 befindet sich ein motorgetriebenes Gebläse 20. Die Drehzahl des Gebläses 20 ist geregelt um den Umlauf des Gases oder Gasgemisches sicherzustellen. Entfernt vom Hauptkondensator 19 ist außerhalb des Kreislaufes 10 außerdem ein Hilfskondensator 21 vorgesehen.

Das Kältemittel wird vom Verdampfer 15 durch einen Kompressor 22 angesaugt, der motorgetrieben ist (nicht dargestellt). Dies erhöht die Temperatur des Kältemittels. Die Verteilung des Kältemittels auf die beiden Kondensatoren 19 und 21 wird von einem angetriebenen Ventil 23 durchgeführt, welches von einem Regler 24 gesteuert wird mithilfe eines Temperaturfühlers 25, der sich im Weg des auf die Trocknungskammer 11 zu fließenden Gases oder Gasgemisches befindet.

Während stabiler Arbeitsbedingungen und. Gleichgewichtszustand (der Anlage) wird die vom Verdampfer 15 absorbierte Energie dem Hauptkondensator 19 zurückgeführt. Wenn der Wärmeverlust im Kreislauf 10 vernachlässigt wird, wird der Wärmeverlust in dem System begrenzt auf die Wärme, die vom Hilfskondensator 21 abgegeben werden muß, welche mengenmäßig der dem Kompressor 22 zugeführten Energie entspricht.

Das Gas oder Gasgemisch kann reaktionsträge sein wie Stickstoff. Dies vermeidet Oxidation des Fettes des Produktes. In einigen Fällen ist es möglich Luft zu verwenden.

Die notwendige Temperaturregelung wird erreicht durch Veränderung der Wärmeabgabe vom Hauptkondensator 19. Überschüssige Wärme wird durch den Hilfskondensator 21 abgegeben. Das Ventil 16 verringert den Druck des Hochdruck-Kältemittels in den Kondensatoren 19 und 21 herunter auf den Druck im Verdampfer 15.

Das Verfahren und die Vorrichtung nach der Erfindung weisen eine Anzahl von Anwendungen auf einschließlich des Trocknens und Vorbehandelns von Futter für Fischfarmen, wie zum Beispiel Futter auf Rogenbasis. Da die Trocknungsbedingungen veränderbar sind, können die geforderten physikalischen Eigenschaften erhalten werden, wie Sinkgeschwindigkeit im Wasser, Dichte des Produktes und Wasserlöslichkeit für Proteine.

In der Trocknungskammer 11 ist ein weiter Bereich von Behandlungstemperaturen erhältlich, von über 100°C bis unter null °C. Im letzten Fall kann der körnige Stoff schon gefroren werden. Soweit rogenbasiertes Futter betroffen ist, kann ein Gefrieren entweder vorangehend vorgenommen werden oder in der Trocknungskammer 11.

Da die vorliegende Erfindung das Trocknen von gefrorenen Materialien und Rohstoffen erlaubt, kann mit der Erfindung ein größerer Bereich von Produkten getrocknet werden als mit irgendeinem anderen bekannten Trocknungsverfahren bzw. irgendeiner anderen bekannten Vorrichtung.

Die Trocknungskammer 11 kann in Richtung auf eine Einlaßöffnung zu einen trichterförmigen Boden aufweisen.

## Patentansprüche

1. Verfahren zum Trocknen und/oder Gefrieren von körnigen Stoffen, insbesondere von in körniger Form vorliegenden organischen Stoffen wie Nahrungsmitteln, Futter und Rohstoffen für pharmazeutische Zwecke,
a) bei dem ein Gas oder Gasgemisch als Trocknungs- und/oder Kältemittel den körnigen Stoff in aufsteigender Richtung durchströmt und diesen während des Trocknens und/oder Gefrierens in Bewegung hält,
b) und bei dem das Gas oder Gasgemisch in einem zur äußeren Atmosphäre hin abgeschlossenen Kreislauf geführt und entfeuchtet wird,
wobei mittels eines nach dem Wärmepumpenprinzip arbeitenden thermodynamischen Kreisprozesses
c) die Entfeuchtung des Gases oder Gasgemisches durch Kondensation des darin enthaltenen Dampfes erfolgt,
d) das entfeuchtete Gas oder Gasgemisch anschließend erwärmt und
e) die Temperatur des Gases oder Gasgemisches durch eine gesteuerte Verteilung des Kältemittels des thermodynamischen Kreisprozesses in einem Nebenzweig des thermodynamischen Kreisprozesses und außerhalb des Kreislaufes für das Gas oder Gasgemisch abhängig von der Temperatur des Gases oder Gasgemisches mittels einer Hilfskondensation des Kältemittels (z.B. Freon) des thermodynamischen Kreisprozesses gesteuert wird.

2. Vorrichtung zum Trocknen und/oder Gefrieren von körnigen Stoffen (14), insbesondere von in körniger Form vorliegenden organischen Stoffen wie Nahrungsmitteln, Futter und Rohstoffen für pharmazeutische Zwecke, bei der ein Gas oder Gasgemisch als Trocknungs- und/oder Kältemittel den körnigen Stoff in aufsteigender Richtung durchströmt und diesen während des Trocknens und/oder Gefrierens in Bewegung hält, wobei das Gas oder Gasgemisch in einem zur äußeren Atmosphäre hin abgeschlossenen Kreislauf (10) geführt und entfeuchtet wird, mit einem im Kreislauf (10) vorgesehenen Gebläse (20) für das Gas oder Gasgemisch mit einem im Kreislauf (10) vorgesehenen, Eingabe- und Entnahmeöffnungen sowie einen gasdurchlässigen Siebboden (13) für den körnigen Stoff aufweisenden Bereich (10A) zum Behandeln des Stoffes mit dem in aufsteigender Richtung durch diesen strömenden und ihn in Bewegung haltenden Gas oder Gasgemisch, und mit einem dem Kreislauf (10) zum Entfeuchten und anschließenden Erwärmen des Gases oder Gasgemisches zugeordneten Verdampfer (15) bzw. Hauptkondensator (19) einer Wärmepumpe (12), der ein außerhalb des Kreislaufes (10) liegender Hilfskondensator (21) zugeordnet ist, welcher mit dem Kältemittelkreislauf der Wärmepumpe (12) über ein Ventil (23) verbunden ist, das von einem Regler (24) gesteuert wird, der mit einem im Kreislauf (10) befindlichen Temperaturfühler (25) verbunden ist.

3. Vorrichtung nach Anspruch 2, **dadurch gekennzeichnet**, daß der den körnigen Stoff aufnehmende Bereich (10A) gegenüber dem hieran anschließenden Bereich (10B, 10C) im Querschnitt erweitert ausgeführt ist.

4. Vorrichtung nach Anspruch 2 oder 3, **dadurch gekennzeichnet**, daß der Kreislauf (10) aus für die Herstellung von Lüftungskanälen, Rohrnetzen und Blechverkleidungen verwendeten Materialien besteht.

5. Vorrichtung nach einem oder mehreren der Ansprüche 2 bis 4, **dadurch gekennzeichnet**, daß im Bereich (10A) für den körnigen Stoff (14) eine drehbare Lochtrommel vorgesehen ist, vorzugsweise mit der Möglichkeit kontinuierlicher Zufuhr und Abfuhr des Stoffes.

6. Vorrichtung nach einem oder mehreren der Ansprüche 2 bis 5, **dadurch gekennzeichnet**, daß der Bereich (10A) für den körnigen Stoff (14) in Richtung auf die Einlaßöffnung für das Trocknungs- und/oder Kältemittel eine trichterförmige Ausbildung aufweist.

## Claims

1. Method for drying and/or freezing granular material, particularly organic material existing in a granular form such as food, fodder and raw materials for pharmaceutical purposes,
a) in which a gas or a gas mixture as a drying and/or refrigerating agent flows through the granular material in an ascending direction and maintains it in motion during drying and/or freezing,
b) and in which the gas or the gas mixture is conducted in a closed loop relative to the outer atmosphere and dehumidified,
in which, by a thermodynamic cycle working according to the heat pump principle,
c) the dehumidification of the gas or the gas mixture is achieved by condensation of the vapour contained therein,
d) the dehumidified gas or the gas mixture is then heated, and
e) the temperature of the gas or the gas mixture is controlled by a controlled distribution of the refrigerating agent of the thermodynamic cycle in a by-pass branch of the thermodynamic cycle and, external of the loop for the gas or the gas mixture, dependent on the temperature of the gas or the gas mixture, by way of an auxiliary condensation of the refrigerating agent (for example freon) of the thermodynamic cycle.

2. Device for drying and/or freezing granular material (14), particularly organic material existing in a granular form such as food, fodder and raw materials for pharmaceutical purposes, in which a gas or a gas mixture as a drying and/or refrigerating agent flows through the granular material in an ascending direction and maintains it in motion during drying and/or freezing, in which the gas or the gas mixture is conducted in a closed loop (10) relative to the outer atmosphere and dehumidified, comprising a fan (20) for the gas or the gas mixture provided in the loop, with a zone (10A) provided in the loop (10) having openings for supply and removal as well as a gas permeable perforated plate (13) for the granular material for the treatment of the material by the gas or the gas mixture flowing through it in an ascending direction and maintaining it in motion, and comprising a vaporizer (15) or a main condenser (19) of a heat pump (12) associated with the loop (10) for the dehumidification and subsequent heating of the gas or the gas mixture, and an auxiliary condenser (21) located externally of the loop (10) associated therewith, said auxiliary condenser (21) being connected with the circuit of the refrigerating agent of the heat pump through a valve (23) controlled by a control unit (24) connected with a temperature sensing element (25) located in the loop (10).

3. Device according to claim 2, **characterized** in that the zone (10A) receiving the granular material is of an enlarged cross section relative to the cross section of the adjacent zones (10B, 10C).

4. Device according to claim 2 or 3, **characterized** in that the loop (10) consists of materials used for the production of ducts, pipes and sheet metal cowlings.

5. Device according to any one of claims 2 to 4,
**characterized** in that the zone (10A) for the granular material (14) is provided with a rotatable perforated drum, preferably allowing a continous supply and removal of the material.

6. Device according to any one of claims 2 to 5,
**characterized** in that the zone (10A) for the granular material (14) is of funnel-like shape in the direction in which the drying and/or refrigerating agent is introduced.

## Revendications

1. Procédé de séchage et/ou de congélation de matières granulaires, en particulier de matières organiques se trouvant sous forme granulaire telles que des aliments pour l'homme ou l'animal et des produits de départ pour des applications pharmaceutiques,
a) dans lequel un gaz ou un mélange de gaz, en tant qu'agent de séchage et/ou de refroidissement, traverse la matière granulaire en direction ascendante et maintient celle-ci en mouvement pendant le séchage et/ou la congélation,
b) et dans lequel le gaz ou le mélange de gaz est dirigé dans un circuit fermé vis-à-vis de l'atmosphère extérieure, et déshydraté,
dans lequel, en appliquant un cycle thermodynamique fonctionnant selon le principe de la pompe à chaleur,
c) on effectue la déshydratation du gaz ou du mélange de gaz par condensation de la vapeur qui y est contenue,
d) on réchauffe ensuite le gaz ou le mélange de gaz déshydraté et
e) on règle la température du gaz ou du mélange de gaz par une répartition contrôlée de l'agent de refroidissement du cycle thermodynamique dans une étape du cycle thermodynamique et, à l'extérieur du circuit pour le gaz ou le mélange de gaz, en fonction de la température du gaz ou du mélange de gaz, au moyen d'une condensation auxiliaire de l'agent de refroidissement (par exemple le fréon) du cycle thermodynamique.

2. Dispositif pour sécher et/ou congeler des matières granulaires (14), en particulier des matières organiques se trouvant sous forme granulaire telles que des aliments pour l'homme ou l'animal et des produits de départ pour des applications pharmaceutiques, dans lequel un gaz ou un mélange de gaz, en tant qu'agent de séchage et/ou de refroidissement, traverse la matière granulaire en direction ascendante et maintient celle-ci en mouvement pendant le séchage et/ou la congélation, dans lequel le gaz ou le mélange de gaz est conduit dans un circuit (10) fermé vis-à-vis de l'atmosphère extérieure, et déshydraté, ayant une soufflerie (20) pour le gaz ou le mélange de gaz, prévue dans le circuit (10), une zone (10A) prévue dans le circuit (10) et présentant des ouvertures pour l'alimentation et l'extraction, ainsi qu'un fond perforé (13) pour la matière granulaire, ce fond perforé (13) pouvant être traversé par les gaz, pour traiter la matière par le gaz ou le mélange de gaz se déplaçant à travers celle-ci en direction ascendante et la maintenant en mouvement, et comprenant un évaporateur (15) ou un condenseur principal (19) d'une pompe à chaleur (12) associé au circuit (10) pour la déshydratation et le réchauffement subséquent du gaz ou du mélange de gaz, qui est associé à un condenseur auxiliaire (21) se trouvant à l'extérieur du circuit (10), ce condenseur auxiliaire (21) étant relié au circuit de l'agent de refroidissement de la pompe à chaleur (12) par l'intermédiaire d'une vanne (23) commandée par un régulateur (24), qui est relié à une sonde de température (25) se trouvant dans le circuit (10).

3. Dispositif selon la revendication 2, caractérisé en ce que la zone (10A) de réception de la matière granulaire est construite de manière à s'élargir en coupe transversale par rapport à la zone (10B,10C) qui lui est consécutive.

4. Dispositif selon la revendication 2 ou 3, caractérisé en ce que le circuit (10) est constitué de matériaux utilisés pour la fabrication de canalisations d'aération, de réseaux de tuyauterie et de chemisages de tôle.

5. Dispositif selon l'une quelconque des revendications 2 à 4, caractérisé en ce que, dans la zone (10A), est prévu un tambour perforé rotatif pour la matière granulaire (14), permettant de préférence l'alimentation et l'évacuation de la matière en continu.

6. Dispositif selon l'une quelconque des revendications 2 à 5, caractérisé en ce que la zone (10A) pour la matière granulaire (14) est construite en forme d'entonnoir en direction de l'ouverture pour l'introduction de l'agent de séchage et/ou de l'agent de refroidissement.
